# EUROPEAN PATENT APPLICATION

(11) **EP 0 980 742 A1**
(43) Date of publication of application: **23.02.2000**
(21) Application number: 99306221.5
(22) Date of filing: 05.08.1999
(51) Int. Cl.: B25F 1/00, B25F 1/04

(54) **Folding combination tool for electricians**

(30) Priority: 14.08.1998 US 134625
(71) Applicant: Cooper Industries, Inc., Houston, Texas 77002 (US)
(72) Inventor: Baker, David C., Raleigh, North Carolina 27615 (US)
(74) Representative: Brunner, Michael John

(57) **Abstract**

An electricians' combination folding tool (10) includes a wire stripper head (40) attached with pivots to two handles (60,70). The handles each include a hollow interior bounded by a base wall and opposite side walls (64,74), and the handles are pivotable about the stripper head (40) to enclose it for a stowed position. Additional tool elements (20-34) useful in electrical work are pivotably mounted to the handles at opposite ends to the wire stripper head (40), for pivoting between a position in the handle interiors and an extended, operational position.

## Description

The invention is directed to a combination folding tool suited in particular for electricians' use.

The tool according to the invention includes a wire stripper head pivotally mounted to channel shaped handles, and the tool can be folded with the stripper head in a stowed position within an interior bounded by the handles.

Additional tools are pivotally mounted to the handles at an end opposite the stripper head. The additional tools include a file, screwdriver bits, a knife blade, and other tools useful for the work of an electrician. Other tools may be added or substituted to adapt the tool.

### BRIEF DESCRIPTION OF THE DRAWINGS

Figure 1 is a front view of a tool in accordance with the invention shown in an open position and with a plurality of additional tools arrayed outwardly;
Figure 2 is a view of a wire stripper head in an open position;
Figure 3 is a view of the wire stripper head of Figure 2 shown in a closed position; and
Figure 4 is a sectional view of the tool in a closed position.

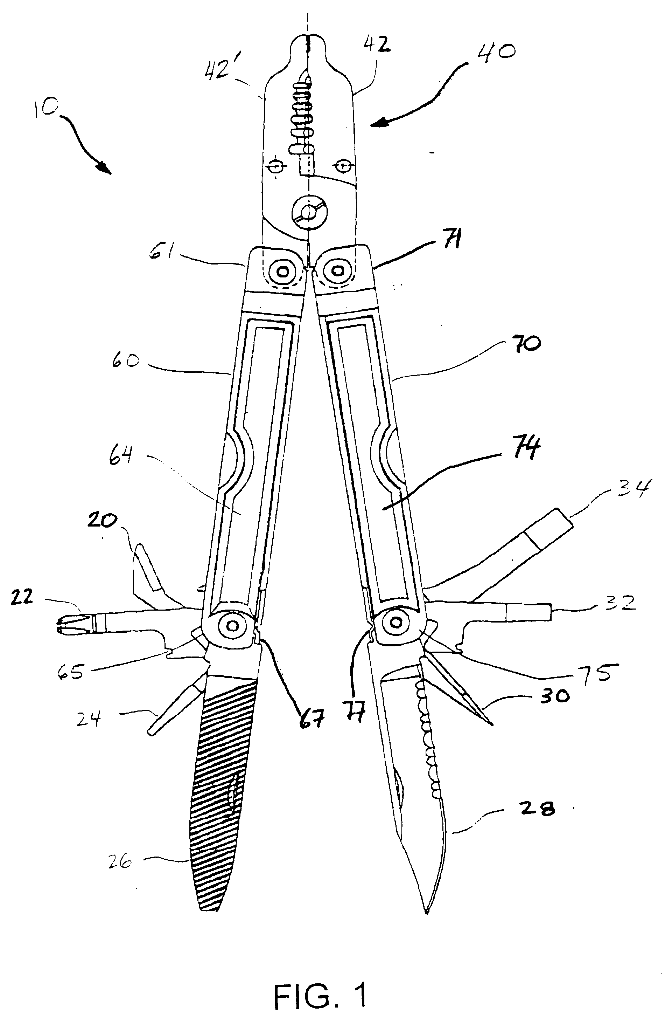

Figure 1 shows a front view of the electricians' combination folding tool 10 according to a preferred embodiment of the invention. The tool includes a wire stripper 40 pivotally fastened to two handles 60, 70. The tool 10 is shown in an open position with the wire stripper 40 in an exposed, functional position, with a plurality of additional tools 20-34 shown arrayed from the handles 60, 70.

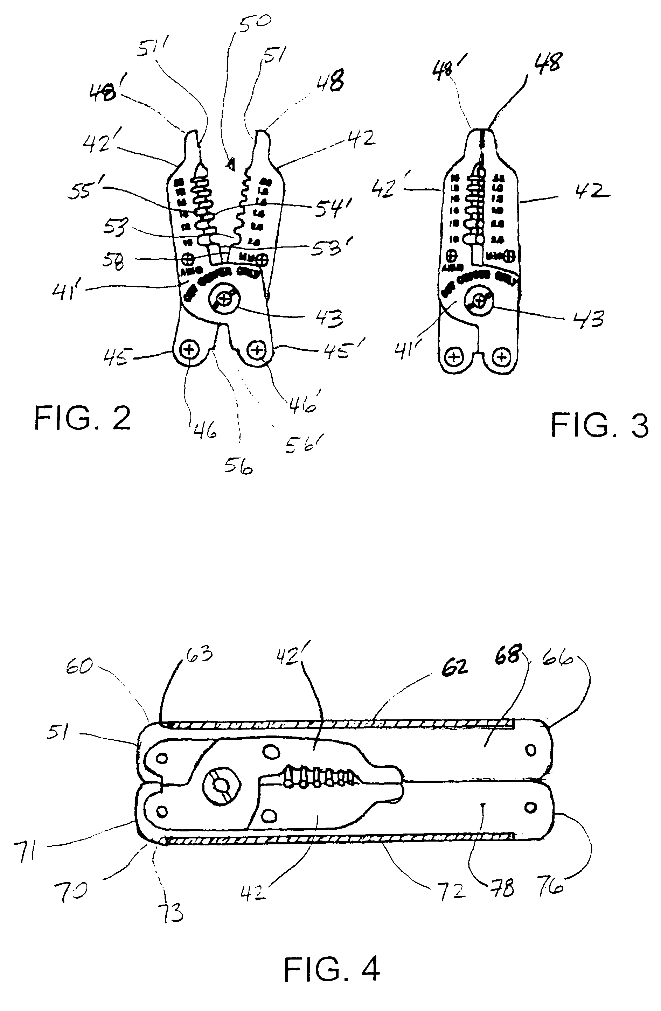

Referring now also to Figure 4, the handles 60, 70 include a base wall 62, 72 and opposite side walls 64, 66; 74, 76 forming an elongated channel or interior space 68, 78.

The wire stripper 40 includes a first stripper head 42 pivotally fastened to a head end 61 of a first 60 of the handles, and a second stripper head 42' attached to a head end 71 of a second 70 of the handles. The stripper heads 42, 42' are supported between the opposite side walls of the respective handles, and washer bearings (not illustrated) are provided between each side wall and the stripper head to help maintain the position of the stripper heads 42, 42' against stripping movement, which is parallel to the axis of the pivot fastener 43.

As seen in Figure 4, the handles 60, 70 are pivotable about the stripper heads 42, 42' so that the handles can be pivoted to a closed position to enclose the stripper 40 in the interior spaces 68, 78 formed by the walls of the handles. The open position, previously mentioned, positions the handles 60, 70 in substantially axial alignment with the stripper heads.

Figure 2 and Figure 3 illustrate the stripper heads 42, 42' removed from the handles. Figure 2 shows the heads in an open position and Figure 3 shows the heads in a closed position. The heads 42, 42' are mutually fastened by a pivot fastener 43 . The fastener allows the heads 42, 42' to pivot relative to one another, and maintains close contact between the flat mating surfaces of the heads 42, 42'.

The stripper heads 42, 42' are identical in form and shape, and are fastened together back to back with front sides 41, 41' facing outward. The following description of the first head 42 applies also to the second head 42' with the prime marks in the figures indicating the identical structure in the second head 42'. The stripper head 42 includes a tang 45 with a mounting hole 46, and a nose 48 at an opposite end. The stripper head 42 includes a working edge 50 which is opposed by the working edge of the complementary stripper head 42'. The working edge 50 includes a flat nose portion 51 and a plurality of arcuate notches 53 linearly disposed on the working edge. The notches 53 are differently sized, and each corresponds to a selected wire gage. The notches 53 are formed as cutting edges. A recess 55 extends laterally from each notch on the stripper head face to provide a relief area. Between adjacent notches are lands or ridges 54. The working edge 50 also includes a cutting edge 58 formed adjacent to the row of notches 53.

When the stripper heads 42, 42' are in the closed position shown in Figure 3, the notches 53 of the first head 42 mate with a corresponding notch 53' in the second head 42' to define circular openings. The flat nose portions 51, 51' abut each other to limit the movement of the working edges toward one another, and repeatably set size of the circular openings. The lands 54, 54' on the opposing working edges 50, 50' engage and overlap, which provides cutting action. Closing the stripper heads causes the notches to cut into the insulation surrounding a wire, as is known in the art. The stripper 40 is then moved along the wire to strip the insulation from the conductor. The relief areas 55 facilitate cutting into and removing the insulation.

The tangs 45 also include a shoulder 56 formed adjacent to the mounting hole 46, which is used to limit the opening pivot movement of the handles 60, 70, and allows pressure applied to the handles to be transmitted to the stripper head working edges 50, 50'. As seen in Figure 4, the base wall 62, 72 of the handles 60, 70 extends to a position approximately where the pivot mountings for the stripper heads 42, 42' is formed. An end edge 63, 73 of the base walls 63, 73 provides an abutment to engage the shoulders 56, 56' of the stripper heads 42, 42' and provide a limit to opening pivot movement.

The pivot fastener 43 is a low profile fastener including first member having a flange and a hollow tubular body with internal threading, and a second member having a flange and a cylindrical, externally threaded body. The second member threadedly fastens in the body of the first member.

The tool handles 60, 70 also include additional tool elements pivotally fastened at a tail end 65, 75 of the handles. The illustrated additional tool elements include a can opener 20, a combined Philips head screw driver/ bottle cap opener, a pick 24, a file 26, a knife blade 28, an awl 30, a small slotted screw driver 32, and a large slotted screw driver 34. The knife blade 28 and file 26 are shown in extended, functional positions, with a spring lock 67, 77 securing the tools in the functional position. The locking device in a preferred embodiment is described in commonly-owned U.S. Patent No. 5,692,304 to Campbell.

Other tool elements could be substituted for those shown to modify the function of the tool, for example, scissors, or hex head drivers.

The invention has been described in terms of preferred embodiments and structure, however, the description is intended to be illustrative and not limiting. Variations, modifications, or substitutions as will occur to those skilled in the art are encompassed by equivalents in the invention as defined by the following claims.

## Claims

1. An electrician's combination tool, comprising:
a first handle having a head and a tail, and having a base wall and opposite side walls defining an interior space;
a second handle having a head and a tail, and having a base wall and opposite side walls defining an interior space;
a first stripper head pivotably mounted to the first handle head, the first stripper head having a working edge including a nose at a distal end and a plurality of linearly adjacent arcuate notches;
a second stripper head pivotably mounted to the second handle head, the second stripper head having a working edge including a nose at a distal end and a plurality of linearly adjacent arcuate notches;
the first stripper head and second stripper head being mutually connected by a pivot fastener for pivotal movement between an open position with the working edges spaced apart, and a closed position with the respective noses in abutment and the respective notches mating to form circular openings;
wherein the first and second handles are pivotable about the first and second stripper heads between a closed position with the handles enclosing the stripper heads in the interior spaces and an open position with the handles extended in substantial alignment with the stripper heads; and
at least one additional tool element pivotably mounted to the tail of one of the first handle and the second handle.

2. The tool of claim 1, wherein the first and second stripper heads each include a shoulder formed adjacent to a handle pivot mounting hole, and said wherein said first handle base wall and said second handle base wall include a head edge that abuts the respective shoulder when the handles are in the open position, the head edge preventing pivoting past the open position.

3. The tool of claim 1, wherein the working edges of the first stripper head and second stripper head each include a straight cutting edge adjacent to the notches.

4. The tool of claim 1, wherein the notches are formed as cutting edges.

5. The tool of claim 1, wherein each of the plurality of notches includes a laterally extending relief groove.

6. The tool of claim 1, wherein the working edges of the first and second stripper heads each include lands between adjacent notches, and wherein the closed position the respective lands overlap.

7. The tool of claim 1, wherein the pivot fastener connecting the first and second stripper heads is a low profile fastener having a first member with a head flange and a tubular, internally threaded body, and a second member having a head flange and a cylindrical, externally threaded body.
